# EUROPÄISCHE PATENTSCHRIFT

(11) **EP 2 655 460 B1**
(45) Veröffentlichungstag und Bekanntmachung des Hinweises auf die Patenterteilung: **01.04.2015**
(21) Anmeldenummer: 11802912.3
(22) Anmeldetag: 19.12.2011
(51) Int. Cl.: C08G 18/10, C08G 18/12, C08L 75/04, C09D 175/04, C08K 3/00, C08K 3/22, C08K 3/34, C08K 3/36, C08K 3/38, C08K 3/40

(54) **REAKTIVE POLYURETHANZUSAMMENSETZUNG MIT ABRIEBFESTEN FÜLLSTOFFEN**
REACTIVE POLYURETHANE COMPOSITION COMPRISING ABRASION-RESISTANT FILLERS
COMPOSITION DE POLYURÉTHANE RÉACTIVE COMPRENANT DES CHARGES RÉSISTANT À L'ABRASION

(30) Priorität: 20.12.2010 DE 102010063552
(43) Veröffentlichungstag der Anmeldung: 30.10.2013
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE); FAHRLÄNDER, Michael, 76297 Stutensee (DE)
(74) Vertreter: Büchel, Edwin
(86) Internationale Anmeldenummer: PCT/EP2011/073237
(87) Internationale Veröffentlichungsnummer: WO 2012/084823

(56) Entgegenhaltungen:
- WO-A1-2007/042398
- CH-A5- 616 880
- DE-A1-102004 057 292

## Beschreibung

Die vorliegende Erfindung betrifft Verfahren zur Herstellung einer reaktiven Polyurethanzusammensetzung. Weiterhin betrifft die vorliegende Erfindung reaktive Polyurethanzusammensetzungen erhältlich aus solchen Verfahren, deren Verwendung als Beschichtungsmasse und Gegenstände mit solchen Zusammensetzungen als Oberfläche.

Für die verschiedensten Anwendungen werden Beschichtungssysteme benötigt, die eine erhöhte Abriebfestigkeit aufweisen müssen. Dies wird häufig dadurch erreicht, dass zu den üblicherweise verwendeten Beschichtungssystemen die Abriebfestigkeit erhöhende Füllstoffe zugegeben werden.

Weiterhin sollen solche Beschichtungssysteme auch kratzfest sein.

DE-A 195 29 987 beschreibt beispielsweise Verfahren zur Herstellung hochabriebfester Lackschichten auf festen Trägermaterialien, wobei ein verschleißhemmendes Mittel auf eine gegebenenfalls bereits eine Lackschicht aufweisende Oberfläche gestreut und anschließend darauf eine Lackschicht aufgebracht wird, die dann gehärtet wird.

Polyurethanlacke als Scheuerschutz-Beschichtungen für den Flugzeugbau sind in DE 10 2005 048 434 beschrieben.

DE-A 27 14 593 beschreibt Verfahren zum Beschichten von Oberflächen zum Schutz gegen Abrieb und Korrosion, wobei mehrmals eine aushärtende Kunstharzschicht aufgebracht wird, in die jeweils vor dem Aushärten Schleifmittelteilchen eingebracht werden.

Das Dokument DE 10 2004 057 292 A1 offenbart in Anspruch 1 ein Verfahren zur Herstellung einer reaktiven Polyurethanzusammensetzung, dadurch gekennzeichnet, dass - in einer ersten Verfahrensstufe aus einem isocyanatreaktiven Polymer oder einer Mischung von isocyanatreaktiven Polymeren mit einem Anteil von mindestens 90 Gew.-%, bevorzugt mindestens 95 Gew.-%, besonders bevorzugt mindestens 99 Gew.-% linearen Molekülen durch Umsetzung mit einem Polyisocyanat mit einem Molekulargewicht < 500 in einem molaren Unterschuss der Isocyanatgruppen des Polyisocyanats gegenüber den isocyanatreativen Endgruppen des Polymers oder der Mischung von Polymeren ein monomerfreies thermoplastisches Polyurethan hergestellt wird, das - in einer zweiten Verfahrensstufe mit einem monomerarmen isocyanat-endständigen Prepolymer in einem Molverhältnis der isocyanatreaktiven Endgruppen des thermoplastischen Polyurethans zu den Isocyanatgruppen des Prepolymers von 1:1,1 bis 1:5 zur isocyanatreaktiven Polyurethanzusammensetzung umgesetzt wird.

Bei den bisher eingesetzten Lacken ergibt sich jedoch das Problem, dass aufgrund der geringen Viskosität sowohl die Korngröße als auch die Konzentration der die Abriebfestigkeit erhöhenden Füllstoffe stark limitiert ist. Ein weiterer Nachteil besteht darin, dass hohe Abriebfestigkeiten häufig nur durch hohe Lackauftragsmengen erreicht werden können, die wiederum ein mehrmaliges Aufbringen und somit mehrere Arbeitsschritte erfordern. Da aufgrund der eingebrachten, die Abriebfestigkeit erhöhende Füllstoffe die einzelnen Lackschichten nicht wie üblich angeschliffen werden können, kömmt es häufig zur Schichttrennung.

Ein weiteres Problem ergibt sich daraus, die Teilchen des Füllstoffes im Lacksystem durch ständiges aktives Rühren in der Schwebe zu halten oder die Teilchen direkt auf die Gegenstandsoberfläche aufzubringen.

Es besteht daher ein Bedarf an verbesserten Beschichtungssystemen mit erhöhter Abriebfestigkeit und Kratzfestigkeit, die die oben genannten Nachteile zumindest zum Teil nicht oder in vermindertem Maße aufweisen. Solche Beschichtungssysteme sollen außerdem auch arbeitshygienisch unbedenklich sein, d.h. möglichst keine gefährlichen Substanzen enthalten oder freisetzen.

Eine Aufgabe der vorliegenden Erfindung besteht somit solche Beschichtungssysteme sowie Verfahren zu deren Herstellung bereitzustellen.

Die Aufgabe wird gelöst durch ein Verfahren zur Herstellung einer reaktiven Polyurethanzusammensetzung, die Schritte enthaltend
- in einem ersten Verfahrensschritt aus einem isocyanatreaktiven Polymer oder einer Mischung von isocyanatreaktiven Polymeren mit einem Anteil von mindestens 90 Gew.-% linearen Molekülen durch Umsetzung mit einem Polyisocyanat mit einem Molekulargewicht < 500 g/mol in einem molaren Unterschuss der Isocyanatgruppen des Polyisocyanats gegenüber den isocyanatreaktiven Endgruppen des Polymers oder der Mischung von Polymeren ein monomerfreies thermoplastisches Polyurethan mit isocyanatreaktiven Gruppen hergestellt wird, das
- in einem zweiten Verfahrensschritt mit einem monomerarmen isocyanatendständigen Prepolymer mit einem Restmonomergehalt von nicht größer als 0,5 Gew.-% in einem Molverhältnis der isocyanatreaktiven Endgruppen des thermoplastischen Polyurethans zu den Isocyanatgruppen des Prepolymers von 1 1,1 bis 1 5 zur reaktiven Isocyanatgruppen enthaltenden Polyurethanzusammensetzung umgesetzt wird,
wobei das Verfahren unter Zusatz einer anorganischen Füllstoffkomponente und gegebenenfalls von Hilfsmitteln erfolgt und die Füllstoffkomponente Teilchen mindestens eines Füllstoffes enthält, die eine Härte nach Mohs von mindestens 6 aufweisen.

Die Aufgabe wird weiterhin gelöst durch reaktive Polyurethanzusammensetzungen, erhältlich nach dem erfindungsgemäßen Verfahren.

Ein weiterer Aspekt der vorliegenden Erfindung ist die Verwendung einer erfindungsgemäßen reaktiven Polyurethanzusammensetzung als Beschichtungsmasse.

Ein weiterer Aspekt der vorliegenden Erfindung ist ein Gegenstand mit einer Oberfläche, die zumindest teilweise eine Schicht aufweist, welche eine erfindungsgemäße reaktive Polyurethanzusammensetzung aufweist.

Es hat sich nämlich gezeigt, dass die erfindungsgemäße reaktive Polyurethanzusammensetzung in besonderem Maße geeignet ist, als abriebfeste Beschichtung zu dienen. Hierbei können insbesondere auch hohe Anteile an die Abriebfestigkeit erhöhende Füllstoffe zum Einsatz kommen. Darüber hinaus reichen bereits geringe Schichtdicken aus, die zudem in nur einem Auftragsschritt appliziert werden können. Es hat sich weiterhin überraschenderweise gezeigt, dass die vorliegende erfindungsgemäße Polyurethanzusammensetzung auch eine sehr gute Kratzfestigkeit aufweist.

Das erfindungsgemäße Verfahren zur Herstellung der reaktiven Polyurethanzusammensetzung entspricht dem Grunde nach demjenigen Verfahren, das aus WO-A 2006/056472 bekannt ist. Das Verfahren erfolgt jedoch im Unterschied zur WO-A unter Zusatz einer anorganischen Füllstoffkomponente, wobei die Füllstoffkomponente Teilchen mindestens eines Füllstoffes enthält, die eine Härte nach Mohs von mindestens 6 aufweisen. Hierdurch wird die Abriebfestigkeit erhöht.

Demzufolge wird zunächst in einem ersten Verfahrensschritt ein isocyanatreaktives Polymer oder eine Mischung von isocyanatreaktiven Polymeren, mit einem Anteil von mindestens 90 Gew.-%, bevorzugt von mindestens 95 Gew.-%, besonders bevorzugt von mindestens 99 Gew.-% linearen Molekülen eingesetzt. Hierbei können die Endgruppen des Polymers oder der Gemische bildenden Polymere, bevorzugt Hydroxylgruppen, Aminogruppen, Carboxygruppen, Carbonsäureanhydridgruppen und/oder Mercaptogruppen sein.

Bevorzugte isocyanatreaktive Polymere sind überwiegend lineare aber auch verzweigte Polyester insbesondere di- aber auch trifunktionelle Polyethylen- und Polypropylenglykole, Polytetrahydrofurane sowie Polyamide und Mischungen daraus. Dabei können auch die entsprechenden Copolymere, insbesondere Blockcopolymere, eingesetzt werden.

Besonders bevorzugt sind Polyesterpolyole, die flüssig, glasartig amorph oder kristallin sein können und ein zahlenmittleres Molekulargewicht zwischen 400 und 25000 g/mol, insbesondere zwischen 1000 und 10000 g/mol, besonders bevorzugt zwischen 2000 und 6000 g/mol, aufweisen. Derartige besonders geeignete Polyesterpolyole sind beispielsweise unter der Bezeichnung Dynacoll® der Degussa AG als Handelsprodukte erhältlich. Weitere geeignete Polyesterpolyole sind Polycaprolactonpolyester, Polycarbonatpolyester sowie Polyesterpolyole auf der Basis von Fettsäuren.

Weitere bevorzugte isocyanatreaktive Polymere sind überwiegend lineare oder leicht verzweigte Polyalkylenoxide, insbesondere Polyethylenoxide, Polypropylenoxide oder Polytetrahydrofurane (Polyoxytetramethylenoxide), mit einem zahlenmittleren Molekulargewicht zwischen 250 und 12000 g/mol, bevorzugt mit einem zahlenmittleren Molekulargewicht zwischen 500 und 4000 g/mol.

In der ersten Verfahrensstufe wird das Polyisocyanat in einem molaren Unterschuss der Isocyanatgruppen derselben gegenüber den isocyanatreaktiven Endgruppen des Polymers eingesetzt. Bevorzugt ist ein Verhältnis der isocyanatreaktiven Endgruppen des Polymers oder der Mischung von Polymeren zu den Isocyanatgruppen des Polyisocyanats im Bereich von 1,1 : 1 bis 5 : 1. Besonders bevorzugt ist das genannte molare Verhältnis deutlich größer als 1, insbesondere im Bereich zwischen 1,3 : 1 und 3 : 1.

Das isocyanatreaktive Polymer, das auch eine Mischung sein kann, wird in der ersten Verfahrensstufe mit einem Polyisocyanat mit einem Molekulargewicht < 500 umgesetzt.

Das Polyisocyanat ist bevorzugt eine Substanz oder eine Mischung von Substanzen, ausgewählt aus aromatischen, aliphatischen oder cycloaliphatischen Polyisocyanaten mit einer Isocyanatfunktionalität zwischen 1 und 4, bevorzugt zwischen 1,8 und 2,2, besonders bevorzugt mit der Isocyanatfunktionalität 2.

Besonders bevorzugt ist das Polyisocyanat mit einer Molekularmasse < 500 eine Substanz oder eine Mischung von Substanzen aus der nachfolgenden Aufzählung: Diisocyanatodiphenylmethane (MDIs), insbesondere 4,4'-Diisocyanatodiphenylmethan und 2,4'-Diisocyanatodiphenylmethan sowie Mischungen verschiedener Diisocyanatodiphenylmethane; hydriertes 4,4'-MDI (bis 4-isocyanatocyclohexyl)methan und hydriertes 2,4'-MDI Tetramethylxylylendiisocyanat (TMXDI); Xylylendiisocyanat (XDI); 1,5-Diisocyanatonaphthalin (NDI); Diisocyanattoluole (TDIs), insbesondere 2,4-Diisocyanatotoluol, sowie TDI-Urethdione, insbesondere dimerem 1-Methyl-2,4-phenylen-diisocyanat (TDI-U), und TDI-Harnstoffe; 1-Isocyanato-3-isocyanatomethyl-3,5,5-trimethylcyclohexan (IPDI) und dessen Isomere und Derivate, insbesondere Di-, Tri- und Polymerisate, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); Hexamethylen-1,6-diisocyanat (HDI) und Methylen-bis-(4-isocyanatocyclohexan) (H₁₂MDI).

In der ersten Verfahrensstufe wird als Zwischenprodukt ein monomerfreies, thermoplastisches Polyurethan mit isocyanatreaktiven Gruppen erhalten, das auch als ein Prepolymer mit freien isocyanatreaktiven Gruppen bezeichnet werden kann.

Das im ersten Verfahrensschritt erhaltene thermoplastische Polyurethan wird in einer zweiten Verfahrensstufe mit einem isocyanatendständigen Prepolymer im Überschuss, d.h. in einem molaren Verhältnis der reaktiven Endgruppen des thermoplastischen Polyurethans zu den Isocyanatgruppen des Prepolymers von 1 : 1,1 bis 10-vorzugsweise 1 1,5 bis 1 6- zum Endprodukt der isocyanatreaktiven Polyurethanzusammensetzung, umgesetzt.

Der Isocyanatüberschuss muss vorteilhafterweise dabei so gewählt werden, dass die resultierende, reaktive Polyurethanzusammensetzung, einen Isocyanatgehalt von mindestens 0,5 %, bevorzugt aber mindestens 1 Gew.-%, bezogen auf die Gesamtzusammensetzung enthält.

Die Erfindung ist nicht eingeschränkt bezüglich der einsetzbaren isocyanatterminierten Prepolymere. Bevorzugt werden aber isocyanatterminierten Prepolymere mit geringem Gehalt an Restmonomeren eingesetzt, insbesondere dann wenn Prepolymere auf Basis von aliphatischen Isocyanaten verwendet werden. Vorausgesetzt sie sind monomerarm, d.h. ihr Restmonomergehalt ist nicht größer als 0,5 Gew.-%, bevorzugt kleiner als 0,3 Gew.-%, besonders bevorzugt kleiner als 0,1 Gew.-%. Geeignet sind insbesondere Umsetzungsprodukte von Polyetherpolyolen, bevorzugt von Polypropylenglykolen, und Polyesterpolyolen mit Polyisocyanaten, insbesondere Diisocyanato-diphenylmethanen, Diisocyanato-toluolen, Diisocyanato-hexan, Isocyanato-3-isocyanatomethyl-3,5,5-trimethyl-cyclohexan (IPDI) Hexamethylen-1,6-diisocyanat (HDI) und/oder H₁₂MDI sowie den Derivaten dieser Isocyanate. Besonders bevorzugt sind dabei Präpolymere auf Basis aliphatischer Isocyanate wie HDI und IPDI.

Solche monomerarmen, isocyanatterminierten Prepolymere werden durch Umsetzung von Polyetherpolyolen mit einem Überschuss an Polyisocyanaten hergestellt. Nach der Umsetzung wird das noch vorhandene monomere Isocyanat mittels Dünnschichtverdampfer entfernt.

Die Umsetzung in den Verfahrensstufen 1 und/oder 2 wird bevorzugt bei einer Temperatur im Bereich von 80 bis 140°C, insbesondere von 100 bis 120°C, durchgeführt.

In einer vorteilhaften Verfahrensweise wird zur Herstellung des thermoplastischen Polyurethans in der ersten Verfahrensstufe das isocyanatreaktive Polymer oder die Mischung der isocyanatreaktiven Polymere bei 120°C unter Vakuum von Wasser befreit. Danach wird bei 80 bis 140°C, bevorzugt bei 100 bis 120°C, mit dem Polyisocyanat umgesetzt.

Das so hergestellte thermoplastische Polyurethan kann in dieser Form isoliert werden und später im zweiten Verfahrensschritt mit einer weiteren Polyisocyanatkomponente, insbesondere einem entmonomerisierten Präpolymer, umgesetzt werden.

Bevorzugt ist aber, den zweiten Verfahrensschritt unmittelbar im Anschluss an den ersten Verfahrensschritt in demselben Reaktor durchzuführen. Hierzu wird das monomerarme Prepolymer zu dem im ersten Verfahrensschritt hergestellten thermoplastischen Polyurethan zugegeben und bei 80 bis 140°C, bevorzugt bei 100 bis 120°C, umgesetzt.

Die so hergestellte reaktive Polyurethanzusammensetzung wird anschließend bevorzugt in wasserdampfundurchlässige Gebinde abgefüllt.

Gegenstand der Erfindung ist auch eine reaktive Polyurethanzusammensetzung, erhältlich nach dem oben beschriebenen Verfahren.

Insbesondere kann die reaktive Polyurethanzusammensetzung neben den der oben genannten anorganischen Füllstoffkomponente auch weitere Hilfsstoffe, insbesondere Füllstoffe, nicht reaktive Polymere, klebrigmachende Harze, Wachse, Weichmacher, Additive, Lichtschutzmittel, Verlaufsmittel, Beschleuniger, Haftvermittler, Pigmente, Katalysatoren, Stabilisatoren und/oder Lösungsmittel enthalten.

Die nicht-reaktiven Polymere können bevorzugt Polyolefine, Polyacrylate, und Polymere auf Basis Ethylen und Vinylacetat mit Vinylacetat-Gehalten von 0 bis 80 Gew.-% oder Polyacrylate sowie Mischungen hiervon sein.

Die nicht-reaktiven Komponenten werden bevorzugt zu Beginn der Herstellung der reaktiven Polyurethanzusammensetzung zugegeben, können aber auch nach der zweiten Verfahrensstufe zugegeben werden.

Die erfindungsgemäßen reaktiven Polyurethanzusammensetzungen eignen sich insbesondere zur Verwendung als einkomponentiger reaktiver Klebstoff oder als Beschichtungsmasse.

Das Verfahren erfolgt unter Zusatz einer anorganischen Füllstoffkomponente umgesetzt wird und gegebenenfalls von Hilfsmitteln, wie sie oben Erwähnung finden, wobei die Füllstoffkomponente Teilchen mindestens eines Füllstoffes enthält, die eine Härte nach Mohs von mindestens 6, vorzugsweise mindestens 7, aufweisen.

Demzufolge können die Füllstoffkomponente und gegebenenfalls die Hilfsstoffe unabhängig voneinander vor dem ersten Verfahrensschritt, während des ersten Verfahrensschrittes zu Beginn, während oder am Ende der Herstellung zugesetzt werden. Auch können die Füllstoffkomponente und gegebenenfalls die Hilfsstoffe unabhängig voneinander zwischen dem ersten und zweiten Verfahrensschritt zugesetzt werden. Schließlich können die Füllstoffkomponente und gegebenenfalls die Hilfsstoffe unabhängig voneinander während des zweiten Verfahrensschrittes zu Beginn, während oder am Ende der Umsetzung zugesetzt werden oder nach dem zweiten Verfahrensschritt.

Vorzugsweise erfolgt der Zusatz der anorganischen Füllstoffkomponente während des zweiten Verfahrensschrittes, insbesondere am Ende der Umsetzung oder nach dem zweiten Verfahrensschritt.

Die Teilchen des mindestens einen Füllstoffes weisen vorzugsweise einen mittleren Teilchendurchmesser im Nanopartikelbereich (< 1 µm) oder im Bereich von 3,5 µm bis 56 µm auf.

Weiterhin ist bevorzugt, dass die anorganische Füllstoffkomponente nur einen Füllstoff aufwei st.

Der mindestens eine Füllstoff kann beispielsweise ein Metalloxid, Siliziumdioxid, Metallcarbid, Siliciumcarbid, Metallnitrid, Siliciumnitrid oder Bornitrid sein. Geeignete Materialien sind Korund, Schmirgel, ein Spinell und/oder Zirkonoxid.

Die anorganische Füllstoffkomponente weist vorzugsweise einen Anteil im Bereich von 5 Gew.-% bis 60 Gew.-% bezogen auf das Gesamtgewicht der reaktiven Polyurethanzusammensetzung auf. Weiter bevorzugt liegt der Anteil im Bereich von 10 Gew.-% bis 50 Gew.-%, weiter mehr bevorzugt im Bereich von 15 Gew.-% bis 30 Gew.-%.

Die so hergestellte reaktive Polyurethanzusammensetzung weist vorzugsweise eine Viskosität von 2.000 mPas bis 100.000 mPas bei 120°C, bevorzugt von 5.000 bis 50.000 mPas, bei 120°C auf.

Bei der so hergestellten Polyurethanzusammensetzung kommt es zu keinem Absetzen der anorganischen Partikel, da die erfindungsgemäße Polyurethanzusammensetzung bei Raumtemperatur fest ist und bei einer typischen Verarbeitungstemperatur von 100-140°C noch ausreichend hochviskos, um die anorganischen Partikel in der Schwebe zu halten.

Die so hergestellte Polyurethanzusammensetzung hat einen geringen Anteil an Restmonomerem Isocyanat von vorzugsweise < 0,1 %, so dass sie auch aus arbeitshygenischer Sicht vorteilhaft ist.

Mit der reaktiven Polyurethanzusammensetzung beschichtete Substrate zeigen eine sehr hohe Abriebfestigkeit und eine hohe Kratzfestigkeit.

Wie oben ausgeführt wurde, ist ein weiterer Aspekt der vorliegenden Erfindung ein Gegenstand mit einer Oberfläche, die zumindest teilweise eine Schicht aufweist, welche eine erfindungsgemäße reaktive Polyurethanzusammensetzung aufweist. Vorzugsweise wird diese Schicht in einem Auftrag erzeugt.

Die vorliegende Erfindung soll anhand der folgenden Ausführungsbeispiele veranschaulicht werden, wobei die Erfindung nicht auf diese beschränkt ist.

### Beispiel 1 (nicht erfindungsgemäss, Einschrittverfahren):

In einem 2 1 Glasgefäss mit Rührer der Fa. Ika werden 350 g Dynacoll 7390 (linearer Polyester der Fa. Evonik, OHZ ca. 30 mg KOH/g), 150 g Dynacoll 7150 (linearer Polyester der Fa. Evonik, OHZ ca. 42 mg KOH/g) zusammen mit 4 g Tinuvin B75 (Lichtschutzmittel Fa. Ciba) und 5 g Byk 361 (Verlaufsmittel, Fa. Byk) vorgelegt und für ca. 1 h bei 130°C entwässert. Anschließend gibt man 291 g Desmodur XP2617 (monomerarmes aliphatisches Präpolymer der Fa. Bayer Material Science auf Basis HDI, NCO-Gehalt ca. 12,5 %; Restmonomergehalt < 0,5%) zu der Mischung und läßt für ca. 2 h bei 130°C unter Vakuum rühren, bis der theoretische NCO-Gehalt erreicht ist.

Zum Schluss gibt man 300 g Edelkorund F220 (Korund Fa. Hermes, mittlerer Teilchendurchmesser ca. 53 my, Mohsche Härte 9,) dazu und lässt für weitere 15 min unter Vakuum rühren. Die so hergestellte Polyurethanzusammensetzung hat eine Viskosität von 4.800 mPas bei 140°C. Ein Absetzen des Füllstoffes kann bei einer Lagerung für 6 h bei 120°C nicht festgestellt werden.
Nach dem Aushärten hat die Zusammensetzung eine Shore-Härte D von ca. 40.
Die reaktive Polyurethanbeschichtung gemäss Beispiel 1 wurde mittels einer Auftragswalze auf einen handelsüblichen Laminatstab aufgebracht. Die Schichtdicke betrug dabei ca. 70 my. Nach 7 Tagen Aushärtung bei Raumtemperatur wurde im Taber-Test nach DIN ISO13329 ein Wert von ca. 2600 erreicht, die Beschichtung hat also eine gute Abriebfestigkeit. Auch nach der vollständigen Aushärtung ist die Beschichtung nicht kratzfest (Coin-Test).

### Beispiel 2 (nicht erfindungsgemäss, ohne Füllstoffkomponente):

In einem 2 1 Glasgefäss mit Rührer der Fa. Ika werden 350 g Dynacoll 7390 (linearer Polyester der Fa. Evonik, OHZ ca. 30 mg KOH/g), 150 g Dynacoll 7150 (linearer Polyester der Fa. Evonik, OHZ ca. 42 mg KOH/g) zusammen mit 4 g Tinuvin B75 (Lichtschutzmittel Fa. Ciba) und 5 g Byk 361 (Fa. Byk) vorgelegt und für ca. 1 h bei 130°C entwässert. Anschließend gibt man in einem 1. Schritt 19 g Vestanat IPDI (Fa. Evonik; Molekulargewicht 222 g/mol; Isocyanat-Funktionalität 2) zu und läßt für 1 h bei 130°C unter Vakuum rühren.
Das molare Verhältnis der isocyanatreaktiven Endgruppen zu den Isocyanatgruppen des Polyisocyanates beträgt in diesem 1. Schritt 1,82. Dieses im ersten Schritt erhaltene thermoplastische Polyurethan hat keinem messbaren Restmonomergehalt.

Daraufhin gibt man in einem 2. Schritt 181 g Desmodur XP2617 zu der Mischung und läßt für ca. 2 h bei 130°C unter Vakuum rühren, bis der theoretische NCO-Gehalt erreicht ist. Das Verhältnis der Isocynatgruppen des monomerarmen Präpolymers zu den isocyanatreaktibven thermoplastischen Polyurethans der 1. Stufe beträgt 4:1.

Die so hergestellte Polyurethanzusammensetzung hat eine Viskosität von 5.200 mPas bei 140°C und einen Restmonomergehalt von <0,5 %.
Nach dem Aushärten hat die Zusammensetzung eine Shore-Härte D von ca. 55.

Nach 7 Tagen Aushärtung wurde im Taber-Test nach EN438 ein Wert von 400-600 erreicht, d.h. die Beschichtung hat eine nicht ausreichende Abriebfestigkeit. Die Beschichtung ist gegenüber der Beschichtung aus Beispiel 1 merklich kratzfester (Coin-Test).

### Beispiel 3 (errindungsgemäss):

In einem 2 1 Glasgefäss mit Rührer der Fa. Ika werden 350 g Dynacoll 7390 (linearer Polyester der Fa. Evonik, OH-Zahl ca. 30 mg KOH/g), 150 g Dynacoll 7150 (linearer Polyester der Fa. Evonik, OH-Zahl ca. 42 mg KOH/g) zusammen mit 4 g Tinuvin B75 (Lichtschutzmittel Fa. Ciba) und 5 g Byk 361 (Fa. Byk) vorgelegt und für ca. 1 h bei 130°C entwässert. Anschließend gibt man 19 g Vestanat IPDI zu und läßt für 1 h bei 130°C unter Vakuum rühren.
Das Verhältnis der isocyanatreaktiven Endgruppen zu den Isocyanatgruppen des Polyisocyanates beträgt in diesem 1. Schritt 1,82. Dieses im ersten Schritt erhaltene thermoplastische Polyurethan hat keinem messbaren Restmonomergehalt.

Daraufhin gibt man in einem 2. Schritt 181 g Desmodur XP2617 zu der Mischung und läßt für ca. 2 h bei 130°C unter Vakuum rühren, bis der theoretische NCO-Gehalt erreicht ist. Das Verhältnis der Isocynatgruppen des monomerarmen Präpolymers zu den isocyanatreaktiven Endgruppen des thermoplastischen Polyurethans der 1. Stufe beträgt 4:1.

Die so hergestellte Polyurethanzusammensetzung hat eine Viskosität von 5.200 mPas bei 140°C und einen Restmonomergehalt von <0,5 %.

Zum Schluss gibt man 300 g Edelkorund F220 (Korund Fa. Hermes) dazu und lässt für weitere 15 min unter Vakuum rühren.

Die so hergestellte Polyurethanzusammensetzung hat eine Viskosität von ca. 7.800 mPas bei 140°C. Ein Absetzen des Füllstoffes kann bei einer Lagerung für 6 h bei 120°C nicht festgestellt werden.

Nach 7 Tagen Aushärtung wurde im Taber-Test nach DIN ISO13329 ein Wert von 2800-3.000 erreicht. Die Shore-Härte D liegt bei 60.
Die Beschichtung ist gegenüber der Beschichtung aus Beispiel 1 merklich kratzfester (Coin-Test).

Die reaktive Polyurethanbeschichtung gemäss Beispiel 3 hat damit im Vergleich zum Stand der Technik gemäss Beispiel 1 und 2 gleichzeitig eine hohe Härte, Kratzfestigkeit und Abriebfestigkeit.

Die Schmelzviskosität in den obigen Beispielen wurde dabei mit einem kalibrierten Viskosimeter HB DV2 der Fa. Brookfield mit einer Spindel 27 und bei 10 U/min bestimmt. Der Taber Test wurde gemäss DIN EN13329 (Taber S42) durchgeführt. Beim Coin-Test auf Kratzbeständigkeit und Haftung wurde eine scharfkantige Münze im Winkel von ca. 45° mit möglichst konstantem Druck über die beschichtete Oberfläche gezogen und der Grad der Verkratzung bewertet. Die Shore-Härte wurde gemäss DIN ISO868 bestimmt.
Der Restmonomergehalt wird nach Derivatvisierung der Proben mit HPLC (UV-Detektion) bestimmt.

## Patentansprüche

1. Verfahren zur Herstellung einer reaktiven Polyurethanzusammensetzung, die Schritte enthaltend
- in einem ersten Verfahrensschritt aus einem isocyanatreaktiven Polymer oder einer Mischung von isocyanatreaktiven Polymeren mit einem Anteil von mindestens 90 Gew.-% linearen Molekülen durch Umsetzung mit einem Polyisocyanat mit einem Molekulargewicht < 500 g/mol in einem molaren Unterschuss der Isocyanatgruppen des Polyisocyanats gegenüber den isocyanatreaktiven Endgruppen des Polymers oder der Mischung von Polymeren ein monomerfreies thermoplastisches Polyurethan mit isocyanatreaktiven Gruppen hergestellt wird, das
- in einem zweiten Verfahrensschritt mit einem monomerarmen isocyanatendständigen Prepolymer mit einem Restmonomergehalt von nicht größer als 0,5 Gew.-% in einem Molverhältnis der isocyanatreaktiven Endgruppen des thermoplastischen Polyurethans zu den Isocyanatgruppen des Prepolymers von 1 : 1,1 bis 1 : 5 zur reaktiven Isocyanatgruppen enthaltenden Polyurethanzusammensetzung umgesetzt wird,
wobei das Verfahren unter Zusatz einer anorganischen Füllstoffkomponente und gegebenenfalls von Hilfsmitteln erfolgt und die Füllstoffkomponente Teilchen mindestens eines Füllstoffes enthält, die eine Härte nach Mohs von mindestens 6 aufweisen und wobei die reaktive Polyurethanzusammensetzung eine Viskosität von 2.000 mPas bis 100.000 mPas bei 120°C aufweist.

2. Verfahren nach Anspruch 1, **dadurch gekennzeichnet, dass** der Zusatz der anorganischen Füllstoffkomponente während des zweiten Verfahrensschrittes erfolgt.

3. Verfahren nach Anspruch 1 oder 2, **dadurch gekennzeichnet, dass** die Teilchen einen mittleren Teilchendurchmesser im Nanopartikelbereich (< 1 µm) oder im Bereich von 3,5 µm bis 56 µm aufweisen.

4. Verfahren nach einem der Ansprüche 1 bis 3, **dadurch gekennzeichnet, dass** das Molverhältnis der isocyanatreaktiven Endgruppen des Polymers oder der Mischung von Polymeren zu den Isocyanatgruppen des Polyisocyanats in der ersten Verfahrensstufe im Bereich von 1,3 : 1 bis 5 : 1.

5. Verfahren nach einem der Ansprüche 1 bis 4, **dadurch gekennzeichnet, dass** die Endgruppen des weitgehend linearen Polymers Hydroxylgruppen, Aminogruppen, Carboxylgruppen, Carbonsäureanhydridgruppen und/oder Mercaptogruppen sind.

6. Verfahren nach einem der Ansprüche 1 bis 5, **dadurch gekennzeichnet, dass** das isocyanatreaktive Polymer oder die Mischung von isocyanatreaktiven Polymeren eine oder mehrere Substanzen, ausgewählt aus der nachfolgenden Aufzählung, ist: Polyester, di- oder trifunktionelle Polyethylen- oder Polypropylenglykole, Polytetrahydrofurane und Polyamide, sowie Copolymere und Blockcopolymere hiervon.

7. Verfahren nach einem der Ansprüche 1 bis 6, **dadurch gekennzeichnet, dass** das Polyisocyanat mit einem Molekulargewicht < 500 eine Substanz oder eine Mischung von Substanzen ist, ausgewählt aus aromatischen, aliphatischen oder cycloaliphatischen Polyisocyanaten mit einer Isocyanatfunktionalität zwischen 1 und 4.

8. Verfahren nach einem der Ansprüche 1 bis 7, **dadurch gekennzeichnet, dass** das monomerreduzierte isocyanat-terminierte Prepolymer für den Einsatz in der zweiten Verfahrensstufe eine oder mehrere Substanzen, ausgewählt aus den Umsetzungsprodukten von Polyetherpolyolen, insbesondere Polypropylenglykolen und Polyesterpolyolen mit Polyisocyanaten, insbesondere Diisocyanato-diphenylmethane (MDI), Diisocyanato-toluole (TDI), Diisocyanato-hexan (HDI), Isocyanato-3-isocyanatomethyl-3,5,5-trimethylcyclohexan (IPDI) und/oder H₁₂MDI enthält.

9. Verfahren nach einem der Ansprüche 1 bis 8, **dadurch gekennzeichnet, dass** die erste und/oder zweite Verfahrensstufe bei einer Temperatur im Bereich von 80 bis 140 °C, bevorzugt von 100 bis 120 °C, durchgeführt wird.

10. Verfahren nach einem der Ansprüche 1 bis 9, **dadurch gekennzeichnet, dass** die anorganische Füllstoffkomponente nur einen Füllstoff aufweist.

11. Verfahren nach einem der Ansprüche 1 bis 10, **dadurch gekennzeichnet, dass** der mindestens eine Füllstoff ein Metalloxid, Siliziumdioxid, Metallcarbid, Siliciumcarbid, Metallnitrid, Siliciumnitrid oder Bornitrid ist.

12. Verfahren nach einem der Ansprüche 1 bis 11, **dadurch gekennzeichnet, dass** die anorganische Füllstoffkomponente einen Anteil im Bereich von 5 Gew.-% bis 60 Gew.-% bezogen auf das Gesamtgewicht der reaktiven Polyurethanzusammensetzung aufweist.

13. Reaktive Polyurethanzusammensetzung, erhältlich nach einem Verfahren nach einem der Ansprüche 1 bis 12.

14. Verwendung einer reaktiven Polyurethanzusammensetzung nach Anspruch 13 als Beschichtungsmasse.

15. Gegenstand mit einer Oberfläche, die zumindest teilweise eine Schicht aufweist, welche eine reaktive Polyurethanzusammensetzung nach Anspruch 13 aufweist.

## Claims

1. A method for producing a reactive polyurethane composition, comprising the steps of
- in a first method step, preparing a monomer-free thermoplastic polyurethane having isocyanate-reactive groups from an isocyanate-reactive polymer or from a mixture of isocyanate-reactive polymers having a fraction of at least 90 wt% of linear molecules by reaction with a polyisocyanate having a molecular weight of < 500 g/mol with a molar deficit of the isocyanate groups of the polyisocyanate relative to the isocyanate-reactive end groups of the polymer or of the mixture of polymers, and
- in a second method step, reacting said thermoplastic polyurethane with a low-monomer-content isocyanate-terminal prepolymer having a residual monomer content of not greater than 0.5 wt%, in a molar ratio of the isocyanate-reactive end groups of the thermoplastic polyurethane to the isocyanate groups of the prepolymer of 1:1.1 to 1:5 to give the polyurethane composition comprising reactive isocyanate groups,
where the method takes place with addition of an inorganic filler component and optionally of auxiliaries and the filler component comprises particles of at least one filler which have a Mohs hardness of at least 6, and where the reactive polyurethane composition has a viscosity of 2000 mPas to 100 000 mPas at 120°C.

2. The method as claimed in claim 1, **characterized in that** the addition of the inorganic filler component takes place during the second method step.

3. The method as claimed in claim 1 or 2, **characterized in that** the particles have an average particle diameter in the nanoparticle range (< 1 µm) or in the range from 3.5 µm to 56 µm.

4. The method as claimed in any of claims 1 to 3, **characterized in that** the molar ratio of the isocyanate-reactive end groups of the polymer or of the mixture of polymers to the isocyanate groups of the polyisocyanate in the first method stage is in the range from 1.3:1 to 5:1.

5. The method as claimed in any of claims 1 to 4, **characterized in that** the end groups of the largely linear polymer are hydroxyl groups, amino groups, carboxyl groups, carboxylic anhydride groups and/or mercapto groups.

6. The method as claimed in any of claims 1 to 5, **characterized in that** the isocyanate-reactive polymer or the mixture of isocyanate-reactive polymers is one or more substances selected from the following recitation: polyesters, di- or trifunctional polyethylene glycols or polypropylene glycols, polytetrahydrofurans and polyamides, and also copolymers and block copolymers thereof.

7. The method as claimed in any of claims 1 to 6, **characterized in that** the polyisocyanate having a molecular weight < 500 is a substance or a mixture of substances selected from aromatic, aliphatic or cycloaliphatic polyisocyanates having an isocyanate functionality between 1 and 4.

8. The method as claimed in any of claims 1 to 7, **characterized in that** the monomer-reduced isocyanate-terminated prepolymer for use in the second method stage comprises one or more substances, selected from the reaction products of polyether polyols, more particularly polypropylene glycols, and polyester polyols with polyisocyanates, more particularly diisocyanatodiphenylmethanes (MDI), diisocyanatotoluenes (TDI), diisocyanatohexane (HDI), isocyanato-3-isocyanatomethyl-3,5,5-trimethylcyclohexane (IPDI) and/or H₁₂MDI.

9. The method as claimed in any of claims 1 to 8, **characterized in that** the first and/or second method stage is carried out at a temperature in the range from 80 to 140°C, preferably from 100 to 120°C.

10. The method as claimed in any of claims 1 to 9, **characterized in that** the inorganic filler component has only one filler.

11. The method as claimed in any of claims 1 to 10, **characterized in that** the at least one filler is a metal oxide, silicon dioxide, metal carbide, silicon carbide, metal nitride, silicon nitride or boron nitride.

12. The method as claimed in any of claims 1 to 11, **characterized in that** the inorganic filler component has a fraction in the range from 5 wt% to 60 wt% based on the total weight of the reactive polyurethane composition.

13. A reactive polyurethane composition obtainable by a method as claimed in any of claims 1 to 12.

14. The use of a reactive polyurethane composition as claimed in claim 13 as a coating material.

15. An article with a surface which at least partly has a coat which has a reactive polyurethane composition as claimed in claim 13.

## Revendications

1. Procédé de fabrication d'une composition de polyuréthane réactive, contenant les étapes suivantes :
- lors d'une première étape de procédé, la fabrication d'un polyuréthane thermoplastique exempt de monomères et contenant des groupes réactifs avec les isocyanates à partir d'un polymère réactif avec les isocyanates ou d'un mélange de polymères réactifs avec les isocyanates contenant une proportion d'au moins 90 % en poids de molécules linéaires, par mise en réaction avec un polyisocyanate ayant un poids moléculaire < 500 g/mol en un déficit molaire des groupes isocyanate du polyisocyanate par rapport aux groupes terminaux réactifs avec les isocyanates du polymère ou du mélange de polymères, qui
- lors d'une seconde étape de procédé, est mis en réaction avec un prépolymère à terminaison isocyanate pauvre en monomères, ayant une teneur résiduelle en monomères inférieure ou égale à 0,5 % en poids, en un rapport molaire entre les groupes terminaux réactifs avec les isocyanates du polyuréthane thermoplastique et les groupes isocyanate du prépolymère de 1:1,1 à 1:5, pour former la composition de polyuréthanne contenant des groupes isocyanate réactifs,
le procédé ayant lieu avec ajout d'un composant charge inorganique et éventuellement d'adjuvants et le composant charge contenant des particules d'au moins une charge, qui présentent une dureté de Mohs d'au moins 6, et la composition de polyuréthane réactive présentant une viscosité de 2 000 mPas à 100 000 mPas à 120 °C.

2. Procédé selon la revendication 1, **caractérisé en ce que** l'ajout du composant charge inorganique a lieu pendant la seconde étape de procédé.

3. Procédé selon la revendication 1 ou 2, **caractérisé en ce que** les particules présentent un diamètre de particule moyen dans la plage des nanoparticules (< 1 µm) ou dans la plage allant de 3,5 µm à 56 µm.

4. Procédé selon l'une quelconque des revendications 1 à 3, **caractérisé en ce que** le rapport molaire entre les groupes terminaux réactifs avec les isocyanates du polymère ou du mélange de polymères et les groupes isocyanate du polyisocyanate lors de la première étape de procédé se situe dans la plage allant de 1,3:1 à 5:1.

5. Procédé selon l'une quelconque des revendications 1 à 4, **caractérisé en ce que** les groupes terminaux du polymère essentiellement linéaire sont des groupes hydroxyle, des groupes amino, des groupes carboxyle, des groupes anhydride d'acide carboxylique et/ou des groupes mercapto.

6. Procédé selon l'une quelconque des revendications 1 à 5, **caractérisé en ce que** le polymère réactif avec les isocyanates ou le mélange de polymères réactifs avec les isocyanates est une ou plusieurs substances choisies dans la liste suivante : les polyesters, les polyéthylène ou polypropylène glycols di- ou trifonctionnels, les polytétrahydrofuranes et les polyamides, ainsi que les copolymères et les copolymères séquencés de ceux-ci.

7. Procédé selon l'une quelconque des revendications 1 à 6, **caractérisé en ce que** le polyisocyanate ayant un poids moléculaire < 500 est une substance ou un mélange de substances choisies parmi les polyisocyanates aromatiques, aliphatiques ou cycloaliphatiques ayant une fonctionnalité isocyanate comprise entre 1 et 4.

8. Procédé selon l'une quelconque des revendications 1 à 7, **caractérisé en ce que** le prépolymère à terminaison isocyanate à teneur réduite en monomères utilisé lors de la seconde étape de procédé est une ou plusieurs substances choisies parmi les produits de réaction de polyéther polyols, notamment de polypropylène glycols et de polyester polyols avec des polyisocyanates, notamment des diisocyanato-diphénylméthanes (MDI), des diisocyanatotoluènes (TDI), le diisocyanato-hexane (HDI), l'isocyanato-3-isocyanatométhyl-3,5,5-triméthyl-cyclohexane (TPDI) et/ou l'H₁₂MDI.

9. Procédé selon l'une quelconque des revendications 1 à 8, **caractérisé en ce que** la première et/ou la seconde étape de procédé sont réalisées à une température dans la plage allant de 80 à 140 °C, de préférence de 100 à 120 °C.

10. Procédé selon l'une quelconque des revendications 1 à 9, **caractérisé en ce que** le composant charge inorganique ne comprend qu'une charge.

11. Procédé selon l'une quelconque des revendications 1 à 10, **caractérisé en ce que** la ou les charges sont un oxyde métallique, le dioxyde de silicium, un carbure métallique, le carbure de silicium, un nitrure métallique, le nitrure de silicium ou le nitrure de bore.

12. Procédé selon l'une quelconque des revendications 1 à 11, **caractérisé en ce que** le composant charge inorganique présente une proportion dans la plage allant de 5 % en poids à 60 % en poids, par rapport au poids total de la composition de polyuréthane réactive.

13. Composition de polyuréthane réactive, pouvant être obtenue par un procédé selon l'une quelconque des revendications 1 à 12.

14. Utilisation d'une composition de polyuréthane réactive selon la revendication 13 en tant que matériau de revêtement.

15. Article comprenant une surface, qui comprend au moins en partie une couche comprenant une composition de polyuréthane réactive selon la revendication 13.
